# EUROPÄISCHE PATENTANMELDUNG

(11) **EP 3 542 750 A1**
(43) Veröffentlichungstag der Anmeldung: **25.09.2019**
(21) Anmeldenummer: 19164636.3
(22) Anmeldetag: 22.03.2019
(51) Int. Cl.: A61C 8/00

(54) **DENTALIMPLANTATSYSTEM**

(30) Priorität: 22.03.2018 CH 3922018
(71) Anmelder: Z-Systems AG, 4702 Oensingen (CH)
(72) Erfinder: Thomke, Ernst, 2540 Grenchen (CH)
(74) Vertreter: Frei Patent Attorneys

(57) **Zusammenfassung**

Ein erfindungsgemässes Dentalimplantatsystem weist ein Verankerungsteil (1) aus einem keramischen Werkstoff und ein Eindrehwerkzeug (5) auf. Das Verankerungsteil (1) besitzt ein Aussengewinde (11), welches eine Achse (100) definiert. Das Verankerungsteil (1) hat eine zu einem koronalen Ende hin offene Aussparung für einen Eingriff eines Befestigungspfostens eines Abutments sowie für einen Eingriff des Eindrehwerkzeugs (5). Die Aussparung (13) weist einen Innenstruktur-Bereich (19) mit einer eine Eindrehgeometrie zum Zusammenwirken mit einer entsprechenden Aussenstruktur des Eindrehwerkzeugs (5) bildenden Innenstruktur auf, und das Eindrehwerkzeug besitzt eine Eingriffpartie (59) mit der entsprechenden Aussenstruktur. Die Aussparung (13) bildet koronal des Innenstruktur-Bereichs (19) einen Abstützbereich (18), wobei zwischen dem Abstützbereich und dem Innenstruktur-Bereich ein Übergangsbereich (14) ausgebildet ist, mit einer im Längsschnitt konkav gekrümmten und/oder konischen Oberfläche. Das Eindrehwerkzeug bildet koronal der Eingriffpartie (59) eine Aufweitung aus, die über eine Übergangspartie (58) in die Eingriffpartie übergeht, und eine Oberfläche des Eindrehwerkzeugs (5) ist im Bereich der Übergangspartie (58) in einem Längsschnitt konvex gekrümmt, so dass sich in diesem Bereich eine Klemmverbindung zwischen dem Eindrehwerkzeug (5) und dem Verankerungsteil (1) ergibt, wenn die Übergangspartie (58) am Übergangsbereich ansteht.

## Beschreibung

Die Erfindung bezieht sich auf das Gebiet der Medizinaltechnik. Sie bezieht sich auf ein Dentalimplantatsystem.

Unter den Dentalimplantatsystemen sind zweiteilige Implantatsysteme verbreitet. Diese besitzen das eigentliche Implantat (Auch "Verankerungsteil" oder, wenn es mit einem Gewinde versehen ist, "Schraube" genannt) und ein zur Befestigung daran vorgesehenes Aufbauteil ("Abutment"). Das Verankerungsteil kann dabei so ausgestaltet sein, dass es ungefähr bündig mit der Knochenoberfläche eingebracht wird (als ein sogenanntes "bone-level"-Implantat), oder es kann mit einem Bereich koronal der Knochenoberfläche versehen sein, der oft gegenüber dem enossalen, i.a. mit einem Gewinde versehenen Bereich aufgeweitet ist, manchmal als "Tulpe" bezeichnet wird und der vorgesehen ist, bis ungefähr zur Zahnfleischoberfläche zu reichen. Implantate mit einem solchen transgingivalen Bereich werden "tissue level"-Implantate genannt. Der aus dem Zahnfleisch herausragende Bereich ("Pfosten"), welcher dem Befestigen einer Suprakonstruktion (oder Tertiärstruktur), also einer Krone, Brücke oder Prothese oder dergleichen, dient, wird in zweiteiligen Implantatsystemen durch das Abutment gebildet.

Als Implantatmaterialien sind nebst dem bewährten Titan keramische Materialien von zunehmender Bedeutung, darunter insbesondere Zirkonoxidkeramiken (auch, wissenschaftlich nicht ganz korrekt, als "Zirkon" bezeichnet). Keramikimplantate haben aufgrund ihrer Farbe ästhetische Vorteile; ausserdem begünstigen sie besonders gut die Integration von Knochen- und Gingivagewebe an der Implantatoberfläche und stossen oft auf eine bessere Akzeptanz bei Patienten als metallische Implantate. Sie haben aber den Nachteil, dass sie sprödhart sind und im Gegensatz zu den duktileren metallischen Implantaten bei grosser mechanischer Belastung zu Sprödbrüchen neigen, weshalb auch nicht sämtliche Implantatformen ohne Weiteres fertigbar sind.

Dies gilt wohl insbesondere weil sich beim Eindrehen des Implantats am Knochengewebe mittels Eindrehwerkzeug am koronalen Ende grosse Abscherkräfte ergeben können. Solche Abscherkräfte könne eine Ursache für die genannten Sprödbrüche sein. Am koronalen Ende ist oft die Materialstärke aufgrund einer nach koronal offenen Aussparung ("Innenbohrung"), in welche das Abutment eingreift, besonders dünn.

DE 20 2008 016 278 U zeigt ein Dentalimplantatsystem mit Implantatteil und Aufbauteil (Abutment), die miteinander über eine selbsthemmende Verbindung mit zwei ineinander eingreifenden Koni verbindbar sind. Das Implantatsystem weist auch ein schraubenzieherartiges Eindrehwerkzeug auf.

US 2010/0248181 zeigt ein Dentalimplantatsystem mit Implantat und Eindrehwerkzeug. Das Eindrehwerkzeug greift in eine Aussparung im Implantat ein, welche einen konischen Bereich und apikal davon einen indexierten Bereich aufweist. Das Eindrehwerkzeug weist entsprechend dem konischen Bereich eine konische Partie auf. Diese wird, wenn das Eindrehwerkzeug in die Aussparung eingeführt ist, an einem Bereich am koronalen Ende des konischen Bereichs abgestützt, während apikal davon keine Abstützung stattfindet. Dadurch kann sich eine konische Selbsthemmung ergeben, wenn eine Spannschraube verwendet wird, um das Eindrehwerkzeug gegen das Implantat zu verspannen. Ein solcher Ansatz soll dazu führen, dass ein Teil des Drehmoments über die selbsthemmende Konusverbindung übertragbar wird. Nachteilig ist, dass beim Lösen des Werkzeugs vom Implantat erhebliche Kräfte aufgebracht werden müssen. Für sprödharte keramische Implantate eignet sich der Ansatz daher nicht. Vielmehr scheint der Aufbau im Hinblick auf die vorstehend geschilderte Herausforderung, wonach am koronalen Ende grosse Abscherkräfte zu vermeiden sind, eher nachteilig.

Es ist eine Aufgabe der vorliegenden Erfindung, ein zweiteiliges Implantatsystem, ein Verankerungsteil und ein Eindrehwerkzeug sowie ein Implantationsset mit Verankerungsteil und Eindrehwerkzeug zur Verfügung zu stellen, welche Nachteile des Standes der Technik überwinden und insbesondere so ausgestaltet sind, dass ein Versagen während der Implantation des Verankerungsteils weniger wahrscheinlich ist.

Diese Aufgabe wird gelöst durch die Erfindung wie sie in den Patentansprüchen definiert ist.

Gemäss einem Aspekt der Erfindung wird ein Dentalimplantatsystem zur Verfügung gestellt, welches aufweist:
- Ein Verankerungsteil zur Verankerung in Knochengewebe, wobei das Verankerungsteil aus einem keramischen Werkstoff gefertigt ist,
- Wobei das Verankerungsteil ein Aussengewinde aufweist, welches eine Achse definiert,
- Wobei das Verankerungsteil eine zu einem koronalen Ende hin offene Aussparung für einen Eingriff eines Befestigungspfostens eines Abutments sowie für einen Eingriff eines Eindrehwerkzeugs aufweist,
- Und das das entsprechende Eindrehwerkzeug,
- Wobei die Aussparung einen Innenstruktur-Bereich mit einer eine Eindrehgeometrie zum Zusammenwirken mit einer entsprechenden Aussenstruktur des Eindrehwerkzeugs bildenden Innenstruktur aufweist, und wobei das Eindrehwerkzeug eine Eingriffpartie mit der entsprechenden Aussenstruktur besitzt,
- Wobei die Aussparung koronal des Innenstruktur-Bereichs einen - beispielsweise konischen - Abstützbereich bildet, wobei zwischen dem Abstützbereich und dem Innenstruktur-Bereich ein Übergangsbereich ausgebildet ist, mit einer im Längsschnitt konkav gekrümmten und/oder konischen Oberfläche (wobei im letzteren Fall der Konuswinkel steiler ist als der Konuswinkel des Abstützbereichs),
- wobei das Eindrehwerkzeug koronal der Eingriffpartie eine Aufweitung ausbildet, die über eine Übergangspartie in die Eingriffpartie übergeht,
- und wobei eine Oberfläche des Eindrehwerkzeugs im Bereich der Übergangspartie zweidimensional konvex gekrümmt, d.h. in einem Längsschnitt gekrümmt ist, so dass sich in diesem Bereich eine Klemmverbindung zwischen dem Eindrehwerkzeug und dem Verankerungsteil ergibt.

Die Klemmverbindung ergibt sich, wenn das Eindrehwerkzeug bis zum Anschlag - der durch das Anstehen der Übergangspartie am Übergangsbereich gebildet wird - bestimmungsgemäss in die Ausnehmung eingeschoben wird.

Mit "Längsschnitt" ist ein Schnitt entlang einer durch die Achse geführten und zu dieser parallelen Ebene gemeint.

Die Klemmverbindung hat den Vorteil, dass das Implantat für die Implantierung am Werkzeug hält, ohne dass dafür Hilfsmittel nötig wären. Im Gegensatz zu einer Klemmverbindung mit ineinander greifenden besonders flachen Koni ist diese Klemmverbindung aber einfach zu lösen, weshalb auch kaum ein Risiko eines Bruchs beim Entfernen des Werkzeugs existiert, im Gegensatz zu einem Klemmen in einem konischen Bereich.

Bei Implantaten mit einem beispielsweise konischen Abstützbereich könnte an sich das Eindrehwerkzeug eine Abstützpartie bilden, welche in den Abstützbereich eingreift, damit das Verankerungsteil am Eindrehwerkzeug hält, wenn der Implantologe es positioniert. Das wäre aber nicht unproblematisch. Erstens müsste der Öffnungswinkel des Konus sehr klein sein, damit sich eine selbsthemmende Passung (Morsekonus-Passung) ergibt, was problematisch sein kann. Zweitens ergibt sich dann das Problem, dass nach einer grösseren Krafteinkopplung während des Implantierungsprozesses das Eindrehwerkzeug relativ fest mit dem Verankerungsteil verbunden ist. Beim Abziehen des Eindrehwerkzeugs können sich daher Beschädigungen des Verankerungsteils oder gar des Knochengewebes ergeben, beispielsweise wenn der Implantologe eine Kraft ansetzt, die in einem auch kleinen Winkel zur Achse wirkt. Wird aus diesem Grund auf eine Abstützpartie des Eindrehwerkzeugs verzichtet, müssen andere Massnahmen vorgesehen werden, damit das Verankerungsteil am Eindrehwerkzeug hält - siehe bspw. WO 2017/096494 - und ausserdem liegen beim Eindrehen axiale Kräfte vom Eindrehwerkzeug auf das Verankerungsteil unter Umständen an Stellen an, die nur beschränkt belastbar sind.

Die Erfindung schafft hier Abhilfe, indem die axiale Position des Eindrehwerkzeugs definiert ist, axiale Kräfte im Abstützbereich anfallen, der dafür auch vorgesehen ist, während wie erwähnt die Klemmverbindung das Implantat am Werkzeug hält.

Der Abstützbereich kann konisch ausgestaltet sein und mit einer entsprechenden konischen Partie des Abutments zusammenwirken, um dieses besonders gut am Verankerungsteil zu fixieren und die bspw. beim Kauen entstehenden grossen axialen Kräfte aufzunehmen.

Am Eindrehwerkzeug kann eine die Aufweitung bildende Führungspartie ausgebildet sein, deren Form derjenigen des Abstützbereiches ungefähr entspricht - insbesondere kann die Führungspartie auch konisch sein und denselben Konuswinkel aufweisen, wenn der Abstützbereich konisch ist. Diese dient aber nicht als Anschlag. Vielmehr kann die Führungspartie innerhalb der Aussparung schwimmend gelagert sein, indem eben die Übergangspartie den Anschlag bildet und die Relativposition definiert.

Die Form der Aussparung im Abstützbereich und die Form des Eindrehwerkzeugs können also insbesondere so aufeinander abgestimmt sein, dass, wenn das Eindrehwerkzeug bis zum Anschlag eingeführt ist, mindestens bereichsweise entlang des Umfangs ein Spalt zwischen dem Eindrehwerkzeug und der Innenwand der Aussparung ausgebildet ist. Ein solcher Spalt kann umlaufend sein, also sich mindestens am koronalen Ende oder an einer anderen axialen Position um den gesamten Umfang herum erstrecken, wobei aber nicht ausgeschlossen ist, dass bei einer elastischen Verformung auch eine Berührung stattfindet. Die Dicke (radiale Ausdehnung) des Spalts kann in Umfangrichtung und in axialer Richtung konstant oder nicht-konstant sein.

Bei einer konischen Führungspartie setzt die Übergangspartie zwischen Aufweitung/Führungspartie und Eingriffpartie insbesondere an einer axialen Position an, bei welcher der Konusdurchmesser etwas kleiner ist als der Durchmesser des konischen Abstützbereichs an dessen apikalem Ende, so dass die Übergangspartie beim Einführen des Eindrehwerkzeugs in axialer Richtung nach apikal hin am Übergangsbereich ansteht, bevor die konische Führungspartie den konischen Abstützbereich berührt, d.h. ohne dass die konische Führungspartie den konischen Abstützbereich berühren muss.

Beim Vorhandensein einer konischen Führungspartie wird ein weiterer Vorteil des erfindungsgemässen Vorgehens manifest, der übrigens unabhängig von der Konizität einer Partie koronal der Übergangspartie ist: Dieser liegt in der Fertigungstechnik. Im Gegensatz zu einer beispielsweise konischen Passung muss die Form des Eindrehwerkzeugs nicht ganz so genau perfekt an die Form der Aussparung angepasst sein; es bestehen Toleranzen. Das System ist funktionsfähig, solange die im Längsschnitt gekrümmte Übergangspartie am Übergangsbereich ansteht, und zwar unabhängig von der exakten Position des (eine umlaufende Linie bildenden) Klemmsitzes.

Der Übergangsbereich kann insbesondere im Längsschnitt konkav gekrümmt sein, wobei dann die Krümmung kleiner ist als die Krümmung der Übergangspartie. Als Alternative kann der Übergangsbereich wie erwähnt konisch sein. In beiden Fällen greift die konvex gekrümmte Übergangspartie so am Übergangsbereich an, dass sich dort nicht wie im Stand der Technik eine konisch-selbsthemmende Verbindung ergibt, sondern eine viel einfacher zu lösende Klemmverbindung entlang einer um die im Längsschnitt konvex gekrümmte Übergangspartie umlaufenden Linie oder eines umlaufenden Streifens.

Apikal des Eindrehgeometriebereichs (des Bereichs der Aussparung, in welchem die Eingriffpartie mit der Eindrehgeometrie zusammenwirkt) kann insbesondere ein Innengewinde vorhanden sein. Dieses dient dem Befestigen des Abutments durch eine Abutmentschraube (auch Okklusalschraube genannt).

Das Implantatsystem kann ferner das Abutment mit dem Befestigungsposten zum Eingreifen in die Aussparung aufweisen. Dabei ist das Abutment bevorzugt ebenfalls keramisch, weil bei keramischen Abutments die Vorteile eines keramischen Implantatsystems besonders wirken.

Auch eine Abutmentschraube - metallisch oder ebenfalls aus einem keramischen Werkstoff - kann zum Implantatsystem gehören. Eine solche Abutmentschraube weist ein Aussengewinde auf. Das Abutment ist dann hülsenartig ausgestaltet ist und eine weist eine durchgehende Öffnung (einen Abutment-Schraubenkanal) auf. Die Abutmentschraube ist in die Öffnung des Abutments aufnehmbar und über das Aussengewinde am Implantat - insbesondere gegebenenfalls am Einsatzelement - befestigbar, wodurch das Abutment in an sich bekannter Art gegen das Implantat pressbar ist. Zu diesem Zweck kann die Abutmentschraube einen Schraubenkopf aufweisen, und an der durchgehenden Öffnung kann eine Schulter ausgebildet sein, an welcher die nach apikal weisende Oberfläche des Schraubenkopfs ansteht, um das Abutment gegen das Implantat zu pressen.

Das keramische Material des Verankerungsteils (und gegebenenfalls des Abutments) kann eine Oxidkeramik, bspw. eine Zirkonoxid-basierte Keramik sein, insbesondere eine Yttrium-stabilisierte Zirkonoxid-basierte Keramik. Auch Aluminiumoxidbasierte Keramiken sind verwendbar.

Das Verankerungsteil kann insbesondere als bone-level-Verankerungsteil (subgingivales Implantat) ausgebildet sein, d.h. es gehört als Ganzes zum enossalen Teil des Implantatsystems und ist so geformt, dass es zum Versenken bis auf Knochenkammhöhe vorgesehen ist, was beispielsweise das Vorhandensein eines sich gegenüber dem Gewinde substantiell aufweitenden koronalen (transgingivalen) Bereichs ausschliesst. Es kann aber anders ausgestaltet sein, beispielsweise auch als tissue-level-Verankerungsteil.

Die Anordnung der Eindrehgeometrie apikal des Abstützbereichs ermöglicht eine Kraftübertragung in einen schon während des Eindrehens enossal angeordneten Bereich. Nebst den obigen Vorteilen bewirkt das den weiteren Vorteil, dass dadurch einer Verwindung des Implantats vorgebeugt werden kann.

Die Eindrehgeometrie (d.h. der axiale Bereich (Eindrehgeometriebereich) der Aussparung, in welchem die Eindrehgeometrie angeordnet ist) kann ihrem axialen Verlauf insbesondere zylindrisch, d.h. entlang der Achse translationssymmetrisch, sein oder bspw. auch konisch oder konkav oder eventuell konvex. Im Querschnitt senkrecht zur Achse ist die Eindrehgeometrie definitionsgemäss nicht rotationssymmetrisch. Insbesondere kann im Bereich der Eindrehgeometrie die Innenstruktur eine n-zählige Drehachse aufweisen, wobei n eine natürliche Zahl grösser 1 ist. Beispiele für Eindrehgeometrie-Querschnittsformen sind ein Oval, Vieleckformen (Dreieck, Viereck, Fünfeck, Sechseck, etc.), eventuell mit abgerundeten Ecken, ein Gleichdick, eine Stern- oder Blumenform, etc.

Die Aussenstruktur der Eingriffpartie des Eindrehwerkzeugs entspricht beispielsweise im Wesentlichen der Eindrehgeometrie, so dass ein passgenaues Einführen möglich ist; die Eindrehgeometrie und die Eingriffpartie können einander also in ihrer Querschnittform entsprechen. Es ist jedoch nicht ausgeschlossen, dass die Aussenstruktur des Eindrehwerkzeugs der Eindrehgeometrie nur bereichsweise folgt; beispielsweise muss sich die Eingriffpartie nicht notwendigerweise bis in äusserste Kanten erstrecken und/oder kann ein regelmässiges Aussen-Sechseck in ein gleichseitiges Dreieck eingepasst werden. Bevorzugt ist oft jedoch, dass eine möglichst grosse Kraftübertragungsfläche vorhanden ist.

Der Abstützbereich kann im Gegensatz zur Eindrehgeometrie rotationssymmetrisch sein. Insbesondere kann der Abstützbereich wie bereits erwähnt konisch, aber auch becherartig-konkav oder eventuell konvex sein; auch ein mindestens bereichsweise zylindrischer Verlauf ist möglich.

Der Abstützbereich kann das Abutment passgenau umschliessen, wodurch auch eine Abdichtung der Aussparung ermöglicht wird. Das Implantat kann im Abstützbereich insbesondere einen Innenkonus aufweisen, wobei das Abutment in einem apikalen Bereich eine einen entsprechenden Aussenkonus bildende Abstützpartie aufweisen kann. Der Innenkonus und der Aussenkonus bilden je mindestens eine paarweise aufeinander angepasste konische Klemmfläche aus, wodurch das Implantat und das Abutment durch eine Klemmverbindung miteinander verbindbar sind.

Das Abutment weist in Ausführungsformen eine im zusammengesetzten Zustand in die Eindrehgeometrie eingreifende Verdrehsicherungsstruktur auf. Diese kann ebenfalls passgenau in die Eindrehgeometrie eingreifen. In alternativen Ausführungsformen kann vorgesehen sein, dass die Verdrehsicherungsstruktur eine x*n-zählige Drehsymmetrie um die Achse aufweist, wobei x eine natürliche Zahl grösser eins ist. In diesen Ausführungsformen ist eine Drehposition des Abutments in Bezug auf das Implantat durch eine Aufnahme der Verdrehsicherungsstruktur des Abutments in die Eindrehgeometrie des Implantats in n mal x diskreten Drehpositionen fixierbar. Das kann von Vorteil sein, wenn aus Gründen einer möglichst günstigen Krafteinleitung beim Eindrehen die Eindrehgeometrie eine niedrige Drehsymmetrie aufweist (bspw. eine bloss dreizählige); durch diesen Ansatz sind trotzdem viele mögliche Relativ-Drehpositionen möglich, was immer dann von Bedeutung sein kann, wenn das Abutment abgewinkelt ist oder eine sonst von der Drehsymmetrie um die Achse abweichende Struktur (abgesehen von der Drehsicherungsstruktur) hat.

Für einen Einwachsprozess kann das Implantatsystem weiterhin eine Kappe aufweisen, über welcher nach dem Implantieren des Verankerungsteils die Gingiva vernäht wird, bis das Implantat (Verankerungsteil) eingeheilt ist, und/oder mindestens einen Gingivaformer, welcher temporär anstelle des Abutments am Verankerungsteil befestigt wird und ein Anwachsen der Gingiva in der später anzustrebenden Form ermöglicht. Kappe und/oder Gingivaformer können keramisch oder auch aus einem geeigneten Kunststoff gefertigt sein, auch metallische Ausführungen kommen für diese temporären Elemente in Frage.

In diesem Text werden die Begriffe "koronal" und "apikal" in Bezug auf die Elemente des Implantatsystems so verwendet, wie sie für den implantierten Zustand, in welchem das Verankerungsteil in den Kieferknochen eingeschraubt ist und das Abutment (und ggf. die Suprakonstruktion) am Verankerungsteil befestigt ist, gelten, analog zum natürlichen Zahn, d.h. "apikal" ist die Richtung zur Wurzelspitze hin, ins Innere des Kieferknochens, "koronal" die entgegengesetzte Richtung zur Zahnkrone hin.

Im Folgenden wird der Erfindungsgegenstand anhand von bevorzugten Ausführungsbeispielen, welche in den beiliegenden Zeichnungen dargestellt sind, näher erläutert. Es zeigen in teilweise von Figur zu Figur verschiedenen Massstäben:
- Fig. 1: ein Implantatsystem mit Verankerungsteil, Abutment, Abutmentschraube und Schraubwerkzeug in einer Ansicht,
- Fig. 2: eine Schnittdarstellung (parallel zur Achse geschnitten) des Systems gemäss Figur 1
- Fig. 3: eine Darstellung entsprechend Fig. 2 des Systems während des Zusammensetzens;
- Fig. 4: eine Ansicht des Verankerungsteils mit einem Eindrehwerkzeug;
- Fig. 5: eine Schnittdarstellung entsprechend Fig. 4;
- Fig. 6: eine Schnittdarstellung von Verankerungsteil und Eindrehwerkzeug während des Eingriffs des Eindrehwerkzeugs in die Aussparung des Verankerungsteils; und
- Fig. 7: ein Detail aus Fig. 6.

In den Figuren bezeichnen gleiche Bezugszeichen gleiche oder analoge Teile.

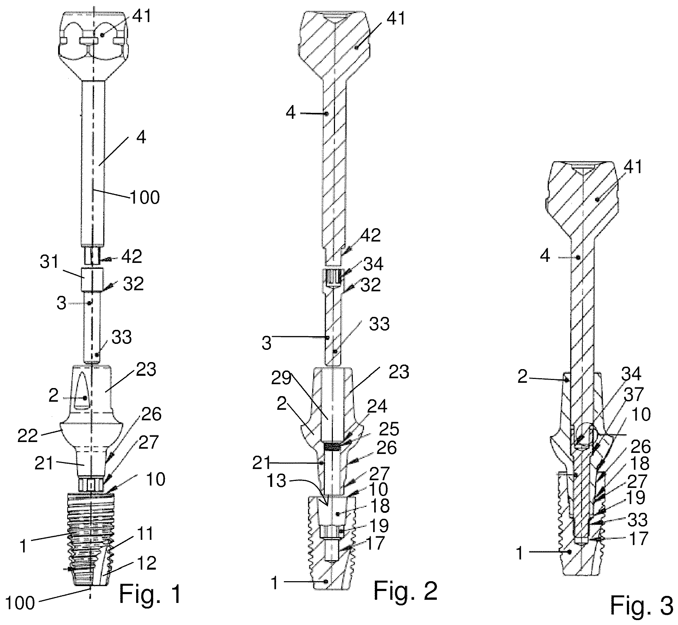

Das Dentalimplantat (Verankerungsteil 1), welches unter anderem in **Figuren 1-3** dargestellt ist, weist ein sich fast über die ganze Länge, fast bis zum koronalen Ende erstreckendes Aussengewinde 11 auf, das eine Achse 100 definiert. Das Verankerungsteil 1 hat eine sich nach apikal leicht verjüngende Form, so, dass es im Querschnitt entlang einer Ebene parallel zur Achse 100 als Ganzes bis auf die Gewindevertiefungen und apikale Spannuten 12 leicht konvex gekrümmt ist und als Ganzes stetig von einer koronal ungefähr zylindrischen in eine apikal sich verjüngenden Form übergeht. Das Aussengewinde 11 hat eine nicht-konstante Gewindetiefe und ist beispielsweise selbstschneidend ausgebildet.

Zum koronalen Ende hin offen ist eine Aussparung 13, in welche im fertig implantierten Zustand des Implantatsystems ein Befestigungspfosten 21 eines Abutments 2 hineinragt. Die Ausnehmung bildet einen koronalen Abstützbereich 18, apikal davon einen Eindrehgeometriebereich 19 und apikal von diesem einen Innengewindebereich 17 aus. Der Abstützbereich 18 weist einen insgesamt konischen Verlauf mit einem sich nach koronal leicht aufweitenden Durchmesser auf. Im Eindrehgeometriebereich 19 bildet die Ausnehmung eine Eindrehgeometrie, indem sie nicht rotationssymmetrisch um die Achse 100 verläuft. Im dargestellten Ausführungsbeispiel eine im Querschnitt entlang einer Ebene senkrecht zur Achse als gleichseitiges Sechseck mit abgerundeten Ecken ausgebildet, wobei sie zylindrisch in dem Sinn ist, dass sie entlang der Achse einen konstanten Querschnitt aufweist. Der Innengewindebereich ist mit einem Innengewinde versehen, welches auf ein Schraubengewinde der Abutmentschraube abgestimmt ist.

Im dargestellten Ausführungsbeispiel ist das Verankerungsteil ein bone-level-Implantat, bei welchem die Implantatschulter 10 mit zirkulärer Kante, welche die Innenverbindung zwischen Verankerungsteil 1 und Abutment 2 abschliesst, auf Knochenniveau ist. Die Erfindung lässt sich aber auch auf andere zweiteilige Implantatsysteme anwenden, namentlich auch auf "tissue level"-Implantate, bei welchen am Verankerungsteil koronal des enossalen Teils mit Gewinde ein bspw. tulpenartig aufgeweiteter transgingivaler Bereich ausgebildet ist.

Das Abutment 2 weist nebst dem Befestigungspfosten 21 einen koronalen Pfosten 23 zur Befestigung einer Suprakonstruktion auf. Apikal davon ist ein beispielsweise an den erwarteten Verlauf der Gingiva angepasster transgingivaler Bereich 22 ausgebildet. Die Formen sowohl eines solchen transgingivalen Bereichs 22 als auch des Pfostens 23 - hier mit einer optionalen Abflachung gezeichnet - inklusive dessen Winkel zum Befestigungspfosten und also zur Achse 100 sind angepasst an spezifische Bedürfnisse und hängen davon ab, wo im Kiefer das Implantat gesetzt wird oder gesetzt worden ist. Insbesondere kann ein Implantations-Set mit mindestens einem Verankerungsteil mehrere verschiedene Abutments für verschiedene Implantatsionssituationen umfassen.

Am Befestigungspfosten 21 sind eine Abstützpartie 26, welche in ihrer Form auf den Abstützbereich 18 abgestimmt ist, und apikal davon eine Verdrehsicherungsstruktur 27 ausgebildet. Die Verdrehsicherungsstruktur weist eine Sechskantform, ebenfalls mit abgerundeten Kanten, auf.

Das Abutment weist eine axial durchgehende Öffnung 29 für die Abutmentschraube auf. Ausserdem diese bildet eine Schulter 24 für den Kopf der Abutmentschraube. An der Öffnung ist ausserdem im dargestellten Ausführungsbeispiel ein optionales Abutment-Innengewinde 25 für ein sogenanntes "Retrieval Tool" (ein Werkzeug zum entfernen des Abutments) vorhanden.

Die Abutmentschraube 3 besitzt einen Schaftbereich mit dem auf das Innengewinde des Verankerungsteils abgestimmten Aussengewinde 33 sowie einen Schraubenkopf 31, der nach apikal hin einen Schraubenanschlag 32 bildet. Im Schraubenkopf ist eine nach koronal offene Ausnehmung mit einer Eingriffsstruktur 34, hier in Form eines Innensechskants, für einen Schraubenzieher 4 ausgebildet. Der Schraubenzieher 4 besitzt entsprechend eine Eingriffpartie, im dargestellten Beispiel mit Sechskantstruktur. In Ausführungsformen sind Eingriffsstruktur und Eingriffpartie leicht nach apikal zulaufend, d.h. leicht konisch ausgeformt, so dass sich der Schraubenzieher bei leichtem Eindrücken leicht mit der Abutmentschraube verkeilt und deshalb diese am Schraubenzieher hält. Koronal besitzt der Schraubenzieher einen Adapterkopf 41, bspw. für eine Ratsche mit einstellbarem Drehmoment.

Fig. 3 zeigt das Implantatsystem während des Vorgangs der Abutment-Befestigung, vor dem Applizieren einer Suprakonstruktion (Tertiärstruktur) ist. Das Gewinde 33 der Abutmentschraube 3 wird apikal vom entsprechenden Innengewinde des Verankerungsteils 1 aufgenommen. Die Abutmentschraube 3 fixiert das Abutment 2 relativ zum Verankerungsteil gegenüber einem Auseinanderziehen in axialer Richtung. Dabei ist das Abutment im Abstützbereich abgestützt und geführt, indem die Abstützpartie 26 dort flächig an der Innenfläche der Ausnehmung anliegt. Gegenüber Verdrehungen ist das Abutment in dieser Position gesichert, indem die Verdrehsicherungsstruktur 27 in den koronalen Bereich der Eindrehgeometrie eingreift.

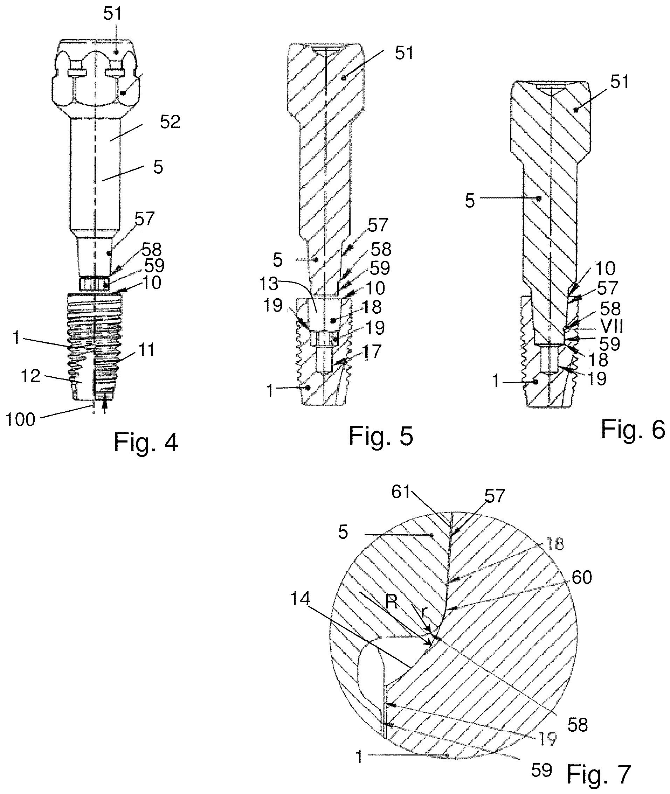

**Figuren 4-6** zeigen das Verankerungsteil 1 mit dem Eindrehwerkzeug 5. Das Eindrehwerkzeug 5 weist wie der vorstehend beschriebene Schraubenzieher einen Adapterkopf 51 bspw. für eine Ratsche mit einstellbarem Drehmoment auf. Apikal eines daran anschliessenden Schaftbereiches 52 ist eine Führungspartie 57 ausgebildet, die wie der Abstützbereich 18 konisch verläuft. Die - optionale - konische Führungspartie 57 erleichtert dem Implantologen das entlang der Achse ausgerichtete Einführen des Eindrehwerkzeugs 5 in die Aussparung 13. Apikal der Führungspartie ist die Eingriffpartie 59 mit einer dem Eingriffbereich 19 entsprechenden Ausssenstruktur ausgebildet. Im dargestellten Ausführungsbeispiel weist die Eingriffpartie 59 eine Sechskantstruktur mit tangentialer Verrundung auf. Diese Konstruktion erlaubt, dass die Eingriffpartie beim Eindrehen des Implantats nicht bloss an einzelnen Punkten an der Eindrehgeometrie ansteht, sondern mindestens entlang von axialen Linien

Wie man in Figur 7, die ein Detail VII (Fig. 6) zeigt, besonders gut sieht, ist in der Übergangspartie 58 zwischen der Eingriffpartie 59 und der Führungspartie 57 das Eindrehwerkzeug gerundet, mit einem minimalen Krümmungsradius r.

Der Übergangsbereich 14 zwischen dem konischen Abstützbereich 18 und dem Innenstruktur-Bereich 19 ist im dargestellten Ausführungsbeispiel ebenfalls gekrümmt (mit Krümmung ist auch hier eine Krümmung nicht nur in tangentialer/zirkumferentieller Richtung, sondern eben auch in einem Schnitt entlang einer Ebene parallel zur Achse 100 gemeint), aber mit einer im Längsschnitt kleineren Krümmung als die Krümmung der Übergangspartie. Die Krümmung des Übergangsbereichs dort, wo die Übergangspartie des Eindrehwerkzeugs daran ansteht, sollte im Längsschnitt auf jeden Fall kleiner sein als die Krümmung der Übergangspartie (d.h. der Krümmungsradius R des Übergangsbereichs 14 sollte grösser sein als der Krümmungsradius r der Übergangspartie); das schliesst auch eine Krümmung von null mit ein, d.h. die Möglichkeit, dass der Übergangsbereich gar nicht gekrümmt sondern konisch, mit einem steileren Konuswinkel als der Abstützbereich, ist.

Aufgrund dieser Verrundung ergibt sich erstens ein Anschlag für das Einführen des Eindrehwerkzeugs. Zweitens ergibt sich eine Klemmverbindung 60 zwischen Werkzeug einerseits und Verankerungsteil andererseits. Im Bereich der Führungspartie 57 ist es nicht nötig, dass das Werkzeug am Abstützbereich 18 der Aussparung anliegt. Vielmehr ist die konische Führungspartie schwimmend in der Aussparung gelagert; es ergibt sich ein in der dargestellten Ausführungsform sehr dünner Spalt 61 zwischen Eindrehwerkzeug und Verankerungsteil. Das schliesst nicht aus dass es bspw. zum koronalen Ende hin aufgrund von Materialelastizität und Fertigungstoleranzen während des Eindrehens zu leichten Berührungen zwischen Eindrehwerkzeug und Abstützbereich kommt.

Die Konizität der Führungspartie 57 dient im Allgemeinen nicht dem Abstützend des Eindrehwerkzeugs sondern einzig der Führung, weshalb sie auch beim Vorhandensein eines konischen Abstützbereiches 18 im Verankerungsteil optional ist.

Der Umstand, dass das Eindrehwerkzeug den Abstützbereich nicht belastet, ist auch im Hinblick auf die Vermeidung von Beschädigungen des Verankerungsteils beim Eindrehen von Vorteil. Der Umstand verhindert nämlich, dass das Eindrehwerkzeug den koronalen Bereich des Verankerungsteils, wo dessen Materialstärke am geringsten ist, belastet.

Für die Anwendung wird zunächst das Verankerungsteil im Knochen implantiert, wobei der Knochen dafür in an sich bekannter Art vorbereitet sein kann, bspw. durch eine Bohrung. Für die Implantation wird das Eindrehwerkzeug verwendet, wobei dank dem erfindungsgemässen Vorgehen die beim Ansetzen das Verankerungsteil am Eindrehwerkzeug hält, wobei dieses nach der Implantation aber trotzdem einfach und fast kraftfrei entfernbar ist. Die anschliessenden Schritte mit Einheilphase (gegebenenfalls mit dafür vorgesehener auf das Verankerungsteil aufgesetzter Kappe), Befestigung eines Provisoriums und/oder des Abutments, Anpassung der Tertiärstruktur etc. können wie an sich von zweiteiligen Implantsystemen her bekannt vorgenommen werden.

## Patentansprüche

1. Dentalimplantatsystem aufweisend:
- Ein Verankerungsteil (1) zur Verankerung in Knochengewebe, wobei das Verankerungsteil aus einem keramischen Werkstoff gefertigt ist,
- Und ein Eindrehwerkzeug (5),
- Wobei das Verankerungsteil (1) ein Aussengewinde (11) aufweist, welches eine Achse (100) definiert,
- Wobei das Verankerungsteil (1) eine zu einem koronalen Ende hin offene Aussparung (13) für einen Eingriff eines Befestigungspfostens eines Abutments sowie für einen Eingriff des Eindrehwerkzeugs (5) aufweist,
- Wobei die Aussparung (13) einen Innenstruktur-Bereich (19) mit einer eine Eindrehgeometrie zum Zusammenwirken mit einer entsprechenden Aussenstruktur des Eindrehwerkzeugs (5) bildenden Innenstruktur aufweist, und wobei das Eindrehwerkzeug eine Eingriffpartie (59) mit einer entsprechenden Aussenstruktur besitzt,
- Wobei die Aussparung (13) koronal des Innenstruktur-Bereichs (19) einen Abstützbereich (18) bildet, wobei zwischen dem Abstützbereich und dem Innenstruktur-Bereich ein Übergangsbereich (14) ausgebildet ist, mit einer im Längsschnitt konkav gekrümmten und/oder konischen Oberfläche;
- wobei das Eindrehwerkzeug koronal der Eingriffpartie (59) eine Aufweitung ausbildet, die über eine Übergangspartie (58) in die Eingriffpartie übergeht,
- und wobei eine Oberfläche des Eindrehwerkzeugs (5) im Bereich der Übergangspartie (58) in einem Längsschnitt konvex gekrümmt ist, so dass sich in diesem Bereich eine Klemmverbindung zwischen dem Eindrehwerkzeug (5) und dem Verankerungsteil (1) ergibt, wenn die Übergangspartie (58) am Übergangsbereich (14) ansteht.

2. System nach Anspruch 1, wobei der Abstützbereich (18) konisch ist.

3. System nach Anspruch 1 oder 2, wobei der Übergangsbereich (14) in einem Längsschnitt gekrümmt ist, wobei dort, wo die Übergangspartie (58) am Übergangsbereich (14) ansteht, eine Krümmung des Übergangsbereichs (14) im Längsschnitt kleiner ist als eine Krümmung der Übergangspartie (58) im Längsschnitt.

4. System nach Anspruch 1 oder 2, wobei der Übergangsbereich dort, wo die Übergangspartie (58) am Übergangsbereich (14) ansteht, konisch ist.

5. System nach einem der vorangehenden Ansprüche, wobei die Aussparung (13) apikal der Eingriffpartie einen Innengewindebereich (17) mit einem Innengewinde bildet.

6. System nach einem der vorangehenden Ansprüche, wobei die Aufweitung des Eindrehwerkzeugs (5) eine Führungspartie (57) bildet, deren Form beispielsweise qualitativ mindestens näherungsweise der Form des Abstützbereichs entspricht.

7. System nach Anspruch 6, wobei die Führungspartie (57) konisch ist.

8. System nach einem der vorangehenden Ansprüche, wobei das Verankerungsteil (1) als bone-level-Verankerungsteil ausgebildet ist.

9. System nach einem der vorangehenden Ansprüche, wobei die Formen des Abstützbereichs (18) und des Eindrehwerkzeugs (5) so aufeinander abgestimmt sind, dass, wenn die Eingriffpartie des Eindrehwerkzeugs in die Aussparung (13) eingeführt ist und die Übergangspartie (58) am Übergangsbereich (14) ansteht, koronal des Übergangsbereichs (14) ein sich in Umfangsrichtung erstreckender Spalt (61) zwischen dem Eindrehwerkzeug und der Innenwand der Aussparung (13) ausgebildet ist.

10. System nach einem der vorangehenden Ansprüche, aufweisend ein Abutment (2) aus einem keramischen Werkstoff, mit einem Befestigungspfosten (21) zum Eingreifen in die Aussparung (13).

11. System nach Anspruch 10, wobei der Befestigungspfosten eine Abstützpartie bildet, die in ihrer Form passgenau auf den Abstützbereich abgestimmt ist.

12. System nach Anspruch 10 oder 11, weiter aufweisend eine Abutmentschraube (3), wobei das Abutment eine in axialer Richtung durchgehende Öffnung (29) aufweist, in welche die Abutmentschraube einführbar ist, wobei die Abutmentschraube eingerichtet ist, für eine Befestigung des Abutments am Verankerungsteil in ein Innengewinde einzugreifen, welches von der Aussparung (13) gebildet wird.

13. System nach Anspruch 12, wobei die Abutmentschraube (3) aus einem keramischen Werkstoff gefertigt ist.
